# EUROPEAN PATENT SPECIFICATION

(11) **EP 1 879 955 B1**
(45) Date of publication and mention of the grant of the patent: **27.06.2012**
(21) Application number: 06724697.5
(22) Date of filing: 03.05.2006
(51) Int. Cl.: C08K 5/098, C08L 21/00

(54) **RUBBER COMPOSITION CONTAINING METAL SALTS OF ORGANIC ACIDS, METHOD OF CURING, CURED COMPOSITIONS, AND ARTICLE**
METALLSALZE ORGANISCHER SÄUREN ENTHALTENDE KAUTSCHUKZUSAMMENSETZUNG, HÄRTUNGSVERFAHREN, GEHÄRTETE ZUSAMMENSETZUNGEN UND GEGENSTAND
FORMULE DE CAOUTCHOUC CONTENANT DES SELS MÉTALLIQUES D'ACIDES ORGANIQUES, MÉTHODE DE DURCISSEMENT, FORMULES DURCIES ET ARTICLE

(30) Priority: 10.05.2005 US 679534 P
(43) Date of publication of application: 23.01.2008
(73) Proprietor: Cray Valley Technology USA, LLC, Wilmington, DE 19803 (US)
(72) Inventor: HENNING, Steven, Kristofer, Downingtown, PA 19335 (US); KLANG, Jeffrey, Allan, West Chester, PA 19382 (US)
(74) Representative: Stolmár, Matthias
(86) International application number: PCT/EP2006/004137
(87) International publication number: WO 2006/119903

(56) References cited:
- WO-A-03/029337
- US-A- 5 126 501

## Description

This invention relates to the field of sulfur vulcanization of rubber, especially to methods, compositions, and cured filled rubber articles wherein sulfur is the primary curing agent. In-situ formed complexes of zinc stearate from zinc oxide and stearic acid are known to improve the kinetics of unaccelerated sulfur vulcanization, and are particularly effective when used with thiazole accelerators. It is believed that soluble zinc can form complexes with accelerator fragments that, when reacted with sulfur, may form the active sulfurating agents.

Metal alcoholates and carboxylates have been shown to provide similar cure characteristics as to in-situ formed zinc stearate, with slight improvements in processing and filler dispersion, for example metal salts of synthetic and naturally occurring fatty acids such as zinc tallate, tallowate, laurate, stearate, naphthenates, and resonates. However, such metal salts provide adequate but not outstanding activating properties, resulting in modest improvements over the rate and state of cure realized in the absence of soluble zinc salts. In addition, such previously used salts typically provide improvements up to a certain loading in the compound formulation and beyond that amount provide no additional benefits.

There is a need in the art for an improved activator which would provide more efficient utilization of sulfur by providing a higher crosslink density and lower sulfur rank of the crosslinks, with the objective of reduced reversion, increased resilience, higher modulus, higher tensile strength, lower hysteresis, and increased scorch safety.

There have been several different prior art proposals concerning the use of unsaturated zinc salts or zinc salts of stearic acid or other saturated organic acids of 8 or more carbon atoms to improve the efficiency of accelerated sulfur vulcanization.

The use of unsaturated zinc salts of organic acids in sulfur curable natural rubber compounding is disclosed in U.S. Pat. Nos. 4,495,326 ; 3,823,122 ; 4,192,790 ; 5,126,501; 5,962,593 ; 5,464,899 ; 5,494,091 ; and 5,769,980.

In one aspect, the invention comprises a sulfur vulcanizable rubber composition comprising natural and/or synthetic rubber, elemental sulfur, or a sulfur donor, and an activation system comprising at least one metal salt of a C₃-C₆ saturated organic acid (containing 3-6 carbon atoms) and preferably 4 carbon atoms. The vulcanizates (cured compositions) derived thereof are another aspect of the invention. When the metal is polyvalent, as is the case with zinc, calcium, and magnesium, for example, the metal can be a mono-substituted basic adjuvant or a di-substituted salt. The metal can alternatively be monovalent. Preferred saturated organic acids are aliphatic ones in C₃-C₆ and more preferably in C₄. More preferred organic acid is isobutyric acid (also known as 2-methyl propionic acid). Preferred metal for the salt is zinc.

A more preferred composition comprises zinc as a metal and isobutyric acid as a saturated organic acid.

In another aspect, the invention comprises a method of vulcanizing (curing) the said rubber composition comprising adding sulfur and, as an activator, at least one metal salt of a saturated organic acid having from 3 to 6 carbon atoms and preferably 4.

A further aspect of the invention is an article prepared by curing the composition of the invention, the composition comprising a rubber, sulfur, and one or more metal salts of C₃-C₆ saturated organic acids.

The metal salts of C₃-C₆ saturated organic acids have activities in accelerated sulfur vulcanizations similar to those of corresponding metal salts of unsaturated organic acids, for example acrylic and methacrylic acids, but have improved cure characteristics and result in improved properties which were unexpected.

Among the improved properties, the metal salts of C₃-C₆ saturated organic acids provide higher crosslink density and improved state-of cure when compared to traditional zinc oxide/stearic acid systems or other commercially available materials such as zinc 2-ethylhexanoate and zinc stearate. In addition to the above benefits, the basic mono-substituted adjuvant metal salt also provides an exceptional level of scorch safety.

The suitable (uncrosslinked) rubbers which may be used are natural rubber and/or synthetic rubber selected from at least one of the following ones : cis-1,4-polyisoprene, polybutadiene, copolymers of isoprene and butadiene, copolymers of acrylonitrile and butadiene, copolymers of acrylonitrile and isoprene, terpolymers of styrene, butadiene and isoprene, copolymers of styrene and butadiene and blends thereof. The above synthetic rubbers may be emulsion polymerized or solution polymerized. The preferred rubbers are natural rubber and/or synthetic selected from at least one of the following ones : cis-1,4-polyisoprene, polybutadiene, copolymers of isoprene and butadiene, terpolymers of styrene, butadiene and isoprene, copolymers of styrene and butadiene and mixtures thereof.

The zinc salts of C₃-C₆ saturated acids are added to the sulfur-vulcanizable rubber. Therefore, one needs to have a sulfur-vulcanizing agent because the compound does not contain any peroxide curatives. Examples of suitable sulfur vulcanizing agents include elemental sulfur (free sulfur) or a sulfur-donating vulcanizing agent, for example, an amine disulfide, polymeric polysulfide or sulfur olefin adducts or mixtures thereof. Preferably, the sulfur vulcanizing agent is elemental sulfur. The amount of sulfur vulcanizing agent will vary depending on the components of the rubber stock and the particular type of sulfur vulcanizing agent that is used. The sulfur vulcanizing agent is generally present in an amount ranging from about 0.5 to about 6.0 parts per 100 parts by weight of rubber. Preferably, the sulfur vulcanizing agent is present in an amount ranging from about 1.0 to about 4.0 parts per 100 parts by weight of rubber (% with respect to rubber component).

Conventional rubber additives may be incorporated in the rubber stock of the present invention. The presence of these conventional rubber additives is not considered to be an essential aspect (characteristic) of the present invention. The additives commonly used in rubber stocks include fillers, plasticizers, waxes, processing oils, peptizers, retarders, antiozonants, antioxidants and the like. The total amount of filler that may be used may range from about 30 to about 150 parts per 100 parts by weight of rubber, with a range of from about 45 to about 100 parts per 100 parts by weight of rubber being preferred. Fillers include clays, calcium carbonate, calcium silicate, titanium dioxide, silica, and carbon black.

Plasticizers can be used in the compositions, preferably in amounts ranging from about 2 to about 50 parts per 100 parts by weight of rubber with a range of about 5 to about 30 parts per 100 parts by weight of rubber being preferred. The amount of plasticizer used will depend upon the softening effect desired. Examples of suitable plasticizers include aromatic extract oils, petroleum softeners including asphaltenes, pentachlorophenol, saturated and unsaturated hydrocarbons and nitrogen bases, coal tar products, cumarone-indene resins and esters such as dibutylphthalate and tricresol phosphate.

Common waxes such as paraffinic waxes and microcrystalline blends can be used in the rubber compositions, preferably in amounts ranging from about 0.5 to 5 parts per 100 parts by weight of rubber.

Typical amounts of processing oils, when used, comprise from about 1 to 70 parts per 100 parts by weight of rubber Such processing oils can include, for example, aromatic, naphthenic and/or paraffinic processing oils.

Conventional accelerator-activators can be used in combination with the metal salts of saturated organic C₃-C₆ acids. For example, metal oxides such as zinc oxide and magnesium oxide which are used in conjunction with acidic materials such as for example, stearic acid, oleic acid, murastic acid, and the like, can be used to form such salts in-situ. The amount of the metal oxide to make such conventional salts in-situ may range from about 0 to about 10 parts per 100 parts by weight of rubber with a range of from about 0 to about 5 parts per 100 parts by weight of rubber being preferred. The amount of fatty acid which may be used may range from about 0 to about 5.0 parts per 100 parts by weight of rubber with a range of from about 0 to about 3 parts per 100 parts by weight of rubber being preferred. The preferred metal oxide is zinc oxide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4 parts per 100 parts by weight of rubber, preferably about 0.8 to about 2.0 parts per 100 parts by weight of rubber. In another embodiment, combinations of a primary and a secondary accelerator might be used with the secondary accelerator being used in a smaller, equal or greater amount to the primary accelerator. Combinations of these accelerators might be expected to produce a synergistic effect on the final properties and are somewhat better than those produced by use of either accelerator alone. In addition, delayed action accelerators may be used which are not affected by normal processing temperatures, but produce a satisfactory cure at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a disulfide, guanidine, dithiocarbamate or thiuram compound.

Fillers may be included in the methods and curable compositions of the invention, preferably in finely divided form. Suitable fillers include, but are not limited to, the following : silica and silicates, thermal blacks (i.e., furnace, channel or lamp carbon black), clays, kaolin, diatomaceous earth, zinc oxide, cork; titania, cotton floc, cellulose floc, leather fiber, elastic fiber, plastic flour, leather flour, fibrous fillers such as glass and-synthetic fibers, metal oxides and carbonates and talc. The amount of filler is dictated by its type and the intended end use of the composition and, in general, may be between 0 and 150 parts by weight per 100 parts of the elastomer and, more preferably, between 50 and 100 parts by weight per 100 parts of the elastomer.

Conventionally, antioxidants and sometimes antiozonants, hereinafter referred to as antidegradants, are added to rubber stocks. Representative antidegradants include monophenols, bisphenols, thiobisphenols, polyphenols, hydroquinone derivatives, phosphites, thioesters, naphthyl amines, diphenyl-p-phenylenediamines, diphenylamines and other diaryl amine derivatives, para-phenylenediamines, quinolines and mixtures thereof. Specific examples of such antidegradants are disclosed in The Vanderbilt Rubber Handbook (1990), pages 282-286. Antidegradants are generally used in amounts from about 0.25 to about 5.0 parts per 100 parts by weight of rubber with a range of from about 1.0 to about 3.0 parts per 100 parts by weight of rubber being preferred.

The sulfur vulcanizable rubber compound is sulfur-cured at a rubber temperature ranging from about 125°C to 180°C. Preferably, the temperature ranges from about 135°C to 160°C. The rubber compound is heated for a time sufficient to sulfur-vulcanize the rubber which may vary depending on the level of curatives and temperature selected. Generally speaking, the time may range from 3 to 60 minutes.

The mixing of the rubber compound can be accomplished by conventional methods. For example, the ingredients can be mixed in two or more stages, namely one non-productive stages followed by a productive mix stage. The final curatives are typically mixed in the final stage which is conventionally called the "productive" mix stage in which the mixing typically occurs at a temperature, or ultimate temperature, lower than the mix temperature(s) of the preceding non-productive mix stage(s).

The above-described zinc salts of C₃-C₆ saturated organic acids may be added in a nonproductive stage or productive stage. Preferably, such zinc salt is added in a productive stage.

The method of mixing the various components of the rubber containing the zinc salts may be in a conventional manner. Examples of such methods include the use of Banburys, mills, extruders and the like to intimately disperse the zinc salt throughout the rubber and improve its effectiveness for subsequent reaction.

Another object of the invention relates to a method comprising curing the composition as defined by the invention by heating. Additional objects are the resulting cured composition and an article comprising the said cured composition.

The sulfur-vulcanized rubber composition of this invention can be used for various purposes. The elastomeric compositions of the invention can be used in applications including, but not limited to tire, tire components, engineered rubber products such as belts and hoses, rubber gaskets and rings, shoe soles, engine mounts and vibration isolation mounts, rubber rollers, and rubber articles for other automotive and industrial applications.

Preferred amounts of metal salt, and more preferably of metal salt of saturated organic acids, having 3 to 6 carbon atoms, are 0.5 to 40 parts per 100 parts by weight of rubber.

The metal salt of C₃-C₆ saturated organic acid can be mono substituted or disubstituted neutral salts.

Examples of C₃-C₆ saturated organic acids having 3 to 6 carbon atoms are propionic acid, butanoic acid, 2-methyl propionic acid (known as isobutyric acid), pentanoic acid, 2-methyl butanoic acid, 2,2-dimethyl propionic acid, hexanoic acid, 2-ethyl butyric acid, 3,3-dimethyl butyric acid, 4-methyl butyric acid, 4-methyl pentanoic acid, cyclopentanecarboxylic acid, and structural isomers of the above acids. Isobutyric acid (having 4 carbon atoms), is preferred. Preferred metal is zinc and more preferred salt is zinc salt of isobutyric acid.

### EXAMPLES

The following examples, in which all parts and percentages are by weight unless otherwise indicated, are presented to illustrate a few embodiments of the invention and comparisons with other compositions.

The compounded stock was prepared by mixing in a 450cc (cubic cm) Brabender prep mixer with the non-productive stage starting conditions of 100°C and 100 rpm mixing for 4 minutes and the productive stage at 60°C, 60 rpm mixing for 2 minutes. Compounded stock was milled between stages and prior to testing. Table 1 outlines the basic formulation used for all subsequent Examples.

**Table 1**

| Stage | Ingredient | phr |
|---|---|---|
| Non-productive | Elastomer | 100 |
| | Carbon Black | 50 |
| | Processing Oil | 10 |
| | Stearic Acid | 2 |
| | Zinc Salt | variable |
| | Antioxidant | 1 |
| Productive | Accelerator | 0.7 |
| | Sulfur | 2.5 |

| | | |
|---|---|---|
| phr " parts per 100 parts by weight of rubber". | | |

The elastomer used was synthetic polyisoprene (Natsyn^{®} 2200, supplied by The Goodyear Tire and Rubber Company). The carbon black used was reinforcing N330-type (Cabot Vulcan^{®} 1345), and the paraffinic process oil was Sunoco Sunpar^{®} 2280 brand. Stearic acid was supplied by Aldrich. The antioxidant used was Uniroyal Chemical Naugard^{®} Q. Flexsys Santocure^{®} TBBS and rubbermaker's sulfur was used in addition to the zinc salts listed below as the curing agents.

The zinc oxide (ZnO), zinc dimethacrylate (ZDMA), zinc monomethacrylate (ZMMA), zinc 2-ethylhexanoate (ZEH) and zinc undecylenate (ZU) were commercially available grades. Zinc diisobutyrate (ZDIB), zinc monoisobutyrate (ZMIB), zinc dibenzoate (ZDB), and zinc dihexanoate (ZDH) were synthesized by reacting zinc oxide with the respective acids. In the case of the neutral salts, greater than two molar equivalents of organic acid were used. For the basic salts (mono functional), molar stoichiometry was used.

A TechPro rheoTech Oscillating Die Rheometer (ODR) was used to determine extent of cure and cure kinetics according to ASTM D 2084. The cure temperature used was 160°C, using an arc deflection of 3°. Physical testing was performed on samples cured in a press to optical cure times (t90). Scorch safety was characterized by the time to a two point rise in torque (ts2). Tensile data was acquired on a Thwing-Albert Materials Tester following ASTM D 412. Compression set was evaluated after heating at 100°C for 22 hours (ASTM D 395).

Results are normalized in all Examples to the control formulation, which contains 5 parts per 100 parts by weight of rubber of zinc oxide. Such a loading is equivalent to 0.063 mmols/100 g rubber. The molar amounts of the zinc salts used in Examples 1-11 are set forth in Table 1.

### EXAMPLES 1 - 11 : Comparative examples

Commercially available unsaturated zinc salts of methacrylic acid were compared to zinc stearate, prepared in-situ from stearic acid and zinc oxide in Examples 1-3. Table 2 provides the relevant cure kinetics and physical property testing data. Example 1 is the control (0.063 mmol ZnO/100 g rubber), while Examples 2 and 3 provide data for elevated levels of ZnO. Examples 4-7 contain zinc dimethacrylate (Sartomer^{®} SR708) and Examples 8-11 contain zinc monomethacrylate (Sartomer^{®} SR709) in increasing loadings.

**Table 2**

| Example | Zn Salt | Loading (mmol/100 g rubber) | Delta Torque | ts2 | t90 | 100% Modulus | Tensile Strength | Compression Set |
|---|---|---|---|---|---|---|---|---|
| 1 | ZnO | 0.063 | 100 | 100 | 100 | 100 | 100 | 100 |
| 2 | ZnO | 0.092 | 138 | 127 | 128 | 122 | 98 | 108 |
| 3 | ZnO | 0.126 | 148 | 126 | 127 | 117 | 101 | 94 |
| 4 | ZDMA | 0.008 | 81 | 76 | 66 | 55 | 59 | 119 |
| 5 | ZDMA | 0.015 | 90 | 78 | 83 | 89 | 97 | 104 |
| 6 | ZDMA | 0.031 | 165 | 72 | 145 | 120 | 95 | 78 |
| 7 | ZDMA | 0.063 | 196 | 81 | 237 | 134 | 87 | 81 |
| 8 | ZMMA | 0.015 | 67 | 84 | 65 | 52 | 63 | |
| 9 | ZMMA | 0.021 | 107 | 134 | 121 | 108 | 95 | |
| 10 | ZMMA | 0.031 | 138 | 120 | 157 | 126 | 98 | |
| 11 | ZMMA | 0.062 | 211 | 119 | 222 | 149 | 91 | |

At molar equivalent loading in the compound, both ZDMA and ZMMA provide significantly higher delta torque (indicative of high crosslink density) and modulus compared to the zinc stearate control (Example 1). Compression set is lower when employing ZDMA. In addition, the mono-basic adjuvant (ZMMA) provides significant improvements in scorch safety. It is noted that greater than equivalent loadings of zinc stearate does not provide the same benefits.

### EXAMPLES 12 - 21 : Examples of the invention

The fully saturated forms of ZDMA and ZMMA were prepared using isobutyric acid. Table 3 provides the cure kinetics and physical testing results when employing zinc diisobutyric acid (Examples 14-17) and zinc monoisobutyric acid (Examples 18-21) as the zinc species in the formulation (Table 1). Example 12 is used as the control (0.063 mmol ZnO/100 g rubber). Table 3 provides the results of cure kinetics and cured physical properties of the compounds derived using these materials as the zinc source.

**Table 3**

| Example | Zn Salt | Loading (mmol/100 g rubber) | Delta Torque | ts2 | t90 | 100% Modulus | Tensile Strength | Compression Set |
|---|---|---|---|---|---|---|---|---|
| 12 | ZnO | 0.063 | 100 | 100 | 100 | 100 | 100 | 100 |
| 13 | ZnO | 0.126 | 114 | 90 | 95 | 106 | 97 | 119 |
| 14 | ZDIB | 0.008 | 75 | 65 | 56 | 81 | 97 | 109 |
| 15 | ZDIB | 0.015 | 89 | 68 | 70 | 99 | 100 | 97 |
| 16 | ZDIB | 0.031 | 145 | 83 | 118 | 122 | 100 | 93 |
| 17 | ZDIB | 0.063 | 169 | 81 | 160 | 152 | 85 | 97 |
| 18 | ZMIB | 0.008 | 76 | 77 | 64 | 76 | 86 | 111 |
| 19 | ZMIB | 0.015 | 105 | 102 | 93 | 112 | 105 | 103 |
| 20 | ZMIB | 0.031 | 119 | 107 | 138 | 139 | 102 | 93 |
| 21 | ZMIB | 0.063 | 148 | 120 | 136 | 153 | 96 | 98 |

Despite being completely saturated, both ZDIB and ZMIB provide similar improvements over the control formulation as ZDMA and ZMMA. It was unexpected that at molar equivalent loading in the compound, both ZDIB and ZMIB provide significantly higher delta torque (indicative of high crosslink density) and modulus compared to the control and the ZDMA and ZMMA. Compression set is lower when employing these saturated zinc salts, ZDIB and ZMIB. The modulus values and tensile strength of the vulcanizates prepared using the saturated zinc salts are higher than the unsaturated analogs.

### EXAMPLES 22 - 31 : Comparative examples

Two alternative zinc salts were compared. Zinc 2-ethylhexanoate (ZEH) (Examples 24-27) is a fully saturated compound, while zinc undecylenate (ZU) is unsaturated (Examples 28-31). Example 22 is used as the control (0.063 mmol ZnO/100 g rubber). Table 4 provides the results of cure kinetics and cured physical properties of the compounds derived using the above materials as zinc sources.

**Table 4**

| Example | Zn Salt | Loading (mmol/100 g rubber) | Delta Torque | ts2 | t90 | 100% Modulus | Tensile Strength | Compression Set |
|---|---|---|---|---|---|---|---|---|
| 22 | ZnO | 0.063 | 100 | 100 | 100 | 100 | 100 | 100 |
| 23 | ZnO | 0.126 | 163 | 97 | 103 | 94 | 97 | 98 |
| 24 | ZEH | 0.008 | 51 | 58 | 51 | 44 | 68 | 110 |
| 25 | ZEH | 0.015 | 64 | 56 | 54 | 57 | 81 | 104 |
| 26 | ZEH | 0.031 | 104 | 81 | 97 | 60 | 73 | 105 |
| 27 | ZEH | 0.063 | 77 | 116 | 104 | 75 | 103 | 106 |
| 28 | ZU | 0.008 | 66 | 75 | 68 | 56 | 87 | 119 |
| 29 | ZU | 0.015 | 84 | 79 | 89 | 75 | 98 | 123 |
| 30 | ZU | 0.031 | 87 | 98 | 145 | 73 | 92 | 114 |
| 31 | ZU | 0.063 | 79 | 96 | 163 | 81 | 70 | 137 |

The zinc salts of the larger organic acids do not provide the same level of improvement as the zinc salts of diisobutyric acid. The addition of ZEH or ZU results in generally lower delta torque values and decreased modulus and tensile strength. These zinc salts differ from those tested in Examples 1-21 by virtue of having larger, sterically hindering organic groups.

### EXAMPLES 32 - 41 : Comparative examples

Again, two alternate zinc salts were evaluated. Zinc dibenzoate (ZDB) (Examples 34-37) contains an unsaturated, aromatic organic structure. Zinc hexanoate (ZDH) (Examples 38-41) is a saturated, less sterically hindered form compared to zinc 2-ethylhexanoate (ZEH). Table 5 compares the cure kinetics and cured physical properties of the compounds derived using these materials as the zinc source.

**Table 5**

| Example | Zn Salt | Loading (mmol/100g rubber) | Delta Torque | ts2 | t90 | 100% Modulus | Tensile Strength | Compression Set |
|---|---|---|---|---|---|---|---|---|
| 32 | ZnO | 0.063 | 100 | 100 | 100 | 100 | 100 | 100 |
| 33 | ZnO | 0.126 | 104 | 116 | 121 | 100 | 93 | 75 |
| 34 | ZDB | 0.008 | 76 | 62 | 57 | 56 | 56 | 100 |
| 35 | ZDB | 0.015 | 79 | 62 | 67 | 72 | 73 | 100 |
| 36 | ZDB | 0.031 | 70 | 64 | 74 | 81 | 73 | 50 |
| 37 | ZDB | 0.063 | 80 | 73 | 88 | 71 | 61 | 88 |
| 38 | ZDH | 0.008 | 68 | 68 | 60 | 54 | 72 | 88 |
| 39 | ZDH | 0.015 | 90 | 68 | 73 | 79 | 89 | 100 |
| 40 | ZDH | 0.031 | 108 | 85 | 127 | 92 | 90 | 25 |
| 41 | ZDH | 0.063 | 120 | 98 | 353 | 76 | 78 | 25 |

ZDB provides no advantage versus the control compound (Example 32) in terms of cure efficiency or tensile properties. Compression set are slightly improved. At equivalent molar loadings, ZDH provides an improvement over ZnO in both delta torque (crosslink density). Compression set is also significantly reduced. Tensile properties of ZDH compounds approach the control values at equal molar loading of zinc.

While the invention has been described and exemplified in details, various alternative embodiments and improvements should become apparent to those skilled in this art without departing from the spirit and scope of the invention.

## Claims

1. A composition comprising natural and/or synthetic rubber, elemental sulfur or a sulfur donor, and an activation system comprising at least one metal salt of a saturated organic acid, which contains 3-6 carbon atoms.

2. The composition of claim 1, wherein the said metal is zinc.

3. The composition of claims 1 or 2, wherein the saturated organic acid contains 4 carbon atoms.

4. The composition of claims 1 to 3, wherein the said metal is zinc and the said saturated organic acid is isobutyric acid.

5. The composition of claims 1 to 4 where the metal salt is present in the range of 0.5 to 40 parts per 100 parts by weight of rubber.

6. The composition according to claims 1 to 5, wherein sulfur is present in the range of 1.0 to 4.0 parts per 100 parts by weight of rubber.

7. A method comprising curing a composition according to claims 1 to 6 by heating.

8. A cured composition prepared by the method of claim 7.

9. An article comprising the cured composition of claim 8.

10. The article of claim 9 in the form of a tire, tire component, engineered rubber product, belt, hose, rubber gasket, ring, shoe soles, engine mount, vibration isolation mount, or rubber roller, and rubber articles for other automotive or industrial applications.

11. The article of claims 9 or 10, in the form of an engineered rubber product.

12. The article of claims 9 to 11, adapted for use in an automotive or industrial application.

## Patentansprüche

1. Zusammensetzung, umfassend natürlichen oder synthetischen Kautschuk elementaren Schwefel oder einen Schwefeldonor und ein Aktivierungssystem, umfassend wenigstens ein Metallsalz einer gesättigten organischen Säure, die 3-6 Kohlenstoffatome enthält.

2. Zusammensetzung nach Anspruch 1, wobei das Metall Zink ist.

3. Zusammensetzung nach Anspruch 1 oder 2, wobei die gesättigte organische Säure 4 Kohlenstoffatome enthält.

4. Zusammensetzung nach Anspruch 1 bis 3, wobei das Metall Zink ist und die gesättigte organische Säure Isobuttersäure ist.

5. Zusammensetzung nach Anspruch 1 bis 4, wobei das Metallsalz im Bereich von 0,5 bis 40 Gewichtsteilen auf 100 Gewichtsteile Kautschuk vorhanden ist.

6. Zusammensetzung nach Anspruch 1 bis 5, wobei Schwefel im Bereich von 1,0 bis 4,0 Gewichtsteilen auf 100 Gewichtsteile Kautschuk vorhanden ist.

7. Verfahren, umfassend das Härten einer Zusammensetzung nach Anspruch 1 bis 6 durch Erwärmen.

8. Gehärtete Zusammensetzung, die mit dem Verfahren nach Anspruch 7 hergestellt ist.

9. Gegenstand, umfassend die gehärtete Zusammensetzung nach Anspruch 8.

10. Gegenstand nach Anspruch 9 in Form eines Reifens, einer Reifenkomponente, eines technischen Kautschukprodukts, eines Bandes, eines Schlauchs, einer Gummidichtung, eines Rings, einer Schuhsohle, eines Motorlagers, eines Lagers zur Schwingungsisolierung oder einer Gummiwalze und in Form von Kautschukgegenständen für andere industrielle Anwendungen und Anwendungen im Automobilbereich.

11. Gegenstand nach Anspruch 9 oder 10 in Form eines technischen Kautschukprodukts.

12. Gegenstand nach Anspruch 9 bis 11, der zur Verwendung im Automobilbereich oder Industrie angepasst ist.

## Revendications

1. Composition comprenant du caoutchouc naturel et/ou synthétique, du soufre élémentaire ou un donneur de soufre et un système d'activation comprenant au moins un sel métallique d'un acide organique saturé qui contient 3 à 6 atomes de carbone.

2. Composition selon la revendication 1, dans laquelle ledit métal est du zinc.

3. Composition selon la revendication 1 ou 2, dans laquelle l'acide organique saturé contient 4 atomes de carbone.

4. Composition selon les revendications 1 à 3, dans laquelle ledit métal est du zinc et ledit acide organique saturé est l'acide isobutyrique.

5. Composition selon les revendications 1 à 4, où le sel métallique est présent dans la plage de 0,5 à 40 parties pour 100 parties en poids de caoutchouc.

6. Composition selon les revendications 1 à 5, dans laquelle du soufre est présent dans la plage de 1,0 à 4,0 parties pour 100 parties en poids de caoutchouc.

7. Procédé comprenant le durcissement d'une composition selon les revendications 1 à 6 par chauffage.

8. Composition durcie préparée par le procédé selon la revendication 7.

9. Article comprenant la composition durcie selon la revendication 8.

10. Article selon la revendication 9 sous la forme d'un pneu, d'un composant de pneu, d'un produit en caoutchouc technique, d'une ceinture, d'un tuyau, d'un joint en caoutchouc, d'un anneau, de semelles de chaussure, d'un support de moteur, d'un support d'isolation de vibrations ou d'un galet suiveur en caoutchouc et d'articles en caoutchouc pour d'autres applications automobiles ou industrielles.

11. Article selon la revendication 9 ou 10 sous la forme d'un produit en caoutchouc technique.

12. Article selon les revendications 9 à 11 adapté à être utilisé dans une application automobile ou industrielle.
